# EUROPÄISCHE PATENTSCHRIFT

(11) **EP 3 175 501 B1**
(45) Veröffentlichungstag und Bekanntmachung des Hinweises auf die Patenterteilung: **24.03.2021**
(21) Anmeldenummer: 15729180.8
(22) Anmeldetag: 16.06.2015
(51) Int. Cl.: H01M 4/62, H01M 10/052, H01M 4/48, H01M 4/58

(54) **KOMPOSITELEKTRODE FÜR EINE ELEKTROCHEMISCHE ZELLE UND ELEKTROCHEMISCHE ZELLE**
COMPOSITE ELECTRODE FOR AN ELECTROCHEMICAL CELL AND ELECTROCHEMICAL CELL
ÉLECTRODE COMPOSITE POUR UNE CELLULE ÉLECTROCHIMIQUE ET CELLULE ÉLECTROCHIMIQUE

(30) Priorität: 30.07.2014 DE 102014214899
(43) Veröffentlichungstag der Anmeldung: 07.06.2017
(73) Patentinhaber: Bayerische Motoren Werke Aktiengesellschaft, 80809 München (DE)
(72) Erfinder: LUX, Simon, Oakland, CA 94611 (US); GENTSCHEV, Ann-Christin, Belmont, CA 94002 (US); PASCHOS, Odysseas, 80805 München (DE)
(86) Internationale Anmeldenummer: PCT/EP2015/063461
(87) Internationale Veröffentlichungsnummer: WO 2016/015915

(56) Entgegenhaltungen:
- EP-A1- 2 228 854
- WO-A1-2011/153105
- US-A1- 2005 034 299
- US-A1- 2006 127 773
- US-A1- 2010 308 277
- US-A1- 2013 253 163

## Beschreibung

Die vorliegende Erfindung betrifft eine Elektrochemische Zellen, insbesondere eine Lithiumionenzelle mit hoher Langzeitstabilität, die eine Kompositelektrode enthält.

Lithiumionenbatterien, auch Lithiumionen-Akkumulatoren genannt, sind aufgrund ihrer hohen Energiedichten, insbesondere auch für portable Anwendungen bestens geeignet. Eine Lithiumionenbatteriezelle umfasst dabei eine Anode, eine Kathode und einen Elektrolyt. Die für die Anoden und Kathoden verwendeten Kompositelektroden können neben den aktiven Materialien Komponenten für den Lithiumtransport, den Lithiumionentransport und die Lithiumionenspeicherung, auch einen Binder, der einen mechanischen Zusammenhalt des Elektrodenmaterials gewährleistet, beinhalten. Herkömmliche Binder sind solche auf Polyvinylidenfluoridbasis, Acrylsäurebasis oder Cellulosebasis, die zur Bereitstellung der notwendigen elektrischen Leitfähigkeit elektrisch leitfähige Additive, wie z.B. Ruß, Carbon-nanoröhren und dergleichen, enthalten. Derartige Elektrodenzusammensetzungen sind unter den erforderlichen Lade - und Entladebedingungen nicht ausreichend stabil. Oftmals kommt es unter Volumenausdehnung des Elektrodenmaterials zu irreversiblen Schädigungen, die die Lebensdauer der Lithiumionenbatterie deutlich reduzieren.

US 2010/308277 A1 offenbart Nanokomposite aus leitfähigen, polymeren und elektronisch aktiven Materialien. Besonders bevorzugte Materialien mit diesen Eigenschaften sind PEDOT und LiFePO₄.Ferner beschrieben werden Elektrodenmaterialien, die diese Nanokomposite umfassen und die aufgrund der Verwendung dieser Materialien dicker ausgebildet sein können.

Ausgehend von diesem Stand der Technik ist es Aufgabe der Erfindung eine elektrochemische Zelle, insbesondere eine Lithiumionenzelle/batterie, mit hoher Energiedichte und großen Lade- und Entladeraten und damit mit einer hohen Lebensdauer, bereitzustellen.

Die Aufgabe wird bei einer elektrochemischen Zelle, insbesondere einer Lithiumionenzelle bzw. Lithiumionenbatteriezelle, durch eine Kompositelektrode mit spezifischer Zusammensetzung gelöst, die einen elastischen, leitfähigen polymeren Binder und ein Konversionsmaterial umfasst. Dabei ist die vorliegende Erfindung in den Ansprüchen definiert.

Ein Konversionsmaterial im Sinne der Erfindung ist eine chemische Verbindung, die mindestens ein Übergangsmetall M und ein Anion X umfasst, also auch Kombinationen von verschiedenen Übergangsmetallen ggf. mit einem oder mehreren Anionen enthalten kann, wobei das Konversionsmaterial als Verbindung MX oder MXY vorliegt, wobei M ausgewählt ist aus der Gruppe bestehend aus: Fe, Bi, Ti, V, Co, Ni, Cu, Mn und Mischungen daraus, wobei X ausgewählt ist aus der Gruppe bestehend aus: F, Cl, S, O, N und P und wobei Y ausgewählt ist aus der Gruppe der Alkali- und Erdalkalimetalle, C und AI. Das Übergangsmetall ist dabei in einem Zellladevorgang der elektrochemischen Zelle vollständig reduzierbar. Erfindungsgemäß kann ein Konversionsmaterial allein oder eine Kombination unterschiedlicher Konversionsmaterialien verwendet werden. Geeignete Konversionsmaterialien sind z.B. aus Jordi Cabana et al., "Beyond Intercalation-Based Li-Ion Batteries: The State of the Art and Challenges of Electrode Materials Reacting Through Conversion Reactions", Adv. Mater. 2010, 22, E170-E192, bekannt.

Weitere bekannte Beispiele für Konversionsmaterialien sind FeF₃, BiF₃, TiF₃, VF₃, FeF₂, CoF₂, NiF₂, CuS, MnS, CoS₂, CuCl₂, Co₃N, Cu₃N, Fe₃N, Ni₃N und MnP₄.

In der erfindungsgemäßen elektrochemischen Zelle, für die die Kompositelektrode Anwendung findet, ist die Kompositelektrode als Kathode ausgebildet.

Die alleinige Verwendung von Konversionsmaterialien in Elektrodenmaterialien für Lithiumionenbatterien ist jedoch nicht ausreichend, um die Nachteile im Stand der Technik zu überkommen. Erfindungsgemäß wird daher das Konversionsmaterial zusammen mit einem elastischen, leitfähigen polymeren Binder eingesetzt. Ein solcher Binder ist aufgrund seiner chemischen Struktur sowohl elektrisch leitfähig als auch Lithiumionen leitend. Daher kann auf den Einsatz von Leitfähigkeitsadditiven im Binder verzichtet, bzw. deren Einsatz deutlich reduziert werden. Leitfähigkeitsadditive in üblichen Bindersystemen aus Polyvinylidenfluorid und dergleichen sind in herkömmlichen Kompositelektroden erforderlich, um einen ausreichenden und schnellen Elektronentransport bzw. Lithiumionentransport in der Kompositelektrode während der Anwendung bzw. Aufladung der Elektroden bereitzustellen. Eine Verwendung von leitfähigen polymeren Bindern, insbesondere unter Verringerung des Anteils an Leitfähigkeitsadditiven im Binder hat sich als vorteilhaft für das Erzielen hoher Lade- bzw. Entladeraten bei Reduzierung von Volumenänderungen herausgestellt. Ohne an die Theorie gebunden zu sein wird angenommen, dass die in herkömmlichen Kompositelektroden vorhandenen Leitfähigkeitsadditive die Volumenänderungen der Kompositelektrode bei der Lithiumioneneinlagerung und Lithiumionenfreisetzung behindern und damit die Lebensdauer der Zelle verringern. Durch den erfindungsgemäßen leitfähigen polymeren Binder in Kombination mit einem Konversionsmaterial und keinem oder einem verringerten Leitfähigkeitsadditivanteil wird eine Kompositelektrode für elektrochemische Zellen mit hoher Energiedichte und sehr guter Anbindung des Aktivmaterials an einen vorzusehenden Stromableiter gewährleistet, die auch hohe Lade- und Entladeraten ermöglicht ohne die Stabilität der Kompositelektrode durch die einhergehende Volumenänderung negativ zu beeinträchtigen. Die erfindungsgemäße Kompositelektrode eignet sich daher insbesondere für Hochkapazitätsanwendungen, wie sie beispielsweise im Automobilbereich erforderlich und gewünscht sind.

Die Unteransprüche beinhalten vorteilhafte Weiterbildungen und Ausgestaltungen der Erfindung.

Wie vorstehend beschrieben liegt aus Stabilitätsgründen das Konversionsmaterial als Verbindung MX oder MXY vor. Hierbei ist M ausgewählt aus der Gruppe bestehend aus: Fe, Bi, Ti, V, Co, Ni, Cu, Mn und Mischungen daraus, da die hier angegebenen Elemente durch eine hohe Verfügbarkeit und sichere Anwendbarkeit gekennzeichnet sind. Aus zuletzt genanntem Grund sind Fe, Mn, Co und Cu unter den Übergangsmetallen M besonders bevorzugt.

X ist aus der Gruppe bestehend aus: F, Cl, S, O, N und P ausgewählt.

Y dient der Stabilisierung des Konversionsmaterials und ist ausgewählt aus der Gruppe der Alkali- und Erdalkalimetalle, C und AI. Besonders bevorzugt ist Y aus der Gruppe bestehend aus: Li, Na, K und C, ausgewählt.

Zur Verbesserung der Leitfähigkeit der erfindungsgemäß verwendeten Kompositelektrode kann diese ferner ein leitfähiges Additiv, ein so genanntes Leitfähigkeitsadditiv, enthalten. Insbesondere ist das leitfähige Additiv aus der Gruppe bestehend aus: C, AI und Cu ausgewählt. Aus Kostengründen und aufgrund seiner guten Verfügbarkeit ist Kohlenstoff (C), und darunter insbesondere Ruß oder Graphit, besonders bevorzugt.

Als weiteres Aktivmaterial bzw. als Lithiumquelle kann, z.B. bei Verwendung der Kompositelektrode für eine Lithiumionenzelle oder Lithiumionenbatterie, die Kompositelektrode ferner vorteilhaft metallisches Lithium, bevorzugt in dispergierter Form, wie z.B. stabilized lithium metal powder (SLMP), enthalten.

Durch einen Anteil an Konversionsmaterial zu einem Anteil an polymerem Binder von 99 : 1, wird eine Kompositelektrode mit besonders hoher Energiedichte erhalten. Je höher dabei der Anteil an Konversionsmaterial im Vergleich zum Anteil des leitfähigen Binders, desto höher ist die Energiedichte. Ab einem Verhältnis von Konversionsmaterial zu Binder, das größer ist als 99 : 1, verliert das Kompositelektrodenmaterial allerdings an Stabilität.

Zur Bereitstellung einer besonders guten Elastizität im Binder unter Verbesserung der Elektronenleitfähigkeit weist der polymere Binder ein aromatisches Rückgrat mit polaren Seitengruppen auf.

Durch ein Einbringen von Polyethylenoxid-Seitenketten in den Binder kann die Lithiumionenleitfähigkeit verbessert werden. Eine sehr hohe Elektronenleitfähigkeit wird durch einen polymeren Binder erzielt, der Polyfluoren-Einheiten und/oder Benzoesäure-Einheiten und/oder Biphenyleinheiten und/oder Fluoren-Einheiten im Rückgrat aufweist.

Unter dem Gesichtspunkt einer verbesserten Lithiumionenleitfähigkeit bei gleichzeitig sehr guter Elektronenleitfähigkeit ist als polymerer Binder (Poly(2,7-9,9-dioctylfluoren-co-2,7-9,9-(di(oxy-2,5,8-trioxadecan))fluorin-co-2,7-fluorenon-co-2,5-1-methylbenzoesäureester)), kurz PFPFOFOMB, besonders vorteilhaft.

Eine besonders stabile und hoch funktionale Zusammensetzung für eine Kompositelektrode, die sehr gut etwaige Volumenänderungen während Ladevorgängen bzw. Entladevorgängen kompensieren kann wird erhalten, da ein Anteil an polymerem Binder 1 bis 5 Gew.-%, bezogen auf das Gesamtgewicht des Konversionsmaterials, beträgt.

Stabilitätseinbußen des Kompositelektrodenmaterials können besonders gut dadurch verhindert werden, dass der polymere Binder frei ist von leitfähigen Partikeln, wie sie in herkömmlichen Bindersystemen zur Bereitstellung einer guten elektrischen Leitfähigkeit, verwendet werden.

Die erfindungsgemäße elektrochemische Zelle ist insbesondere eine Lithiumionenbatteriezelle bzw. Lithiumionenbatterie. Die elektrochemische Zelle umfasst eine Anode, eine Kathode, mindestens einen Elektrolyten und mindestens einen Separator. In der erfindungsgemäßen elektrochemischen Zelle ist die Kathode oder sind beide Elektroden aus einer wie vorstehend beschriebenen Kompositelektrode gebildet. Als Anode kann dabei auch eine herkömmliche Anode verwendet werden. Eine herkömmliche Anode ist z.B. aus einem typischen Anodenmaterial, wie z.B. Graphit, Silizium oder Li₄Ti₅O₁₂, einem Leitadditiv und einem herkömmlichen Binder, aufgebaut. Die erfindungsgemäße elektrochemische Zelle muss aber nicht zwingend eine Anode im herkömmlichen Sinne enthalten. Die Funktionalität einer Anode kann sich beispielsweise auch durch eine Abscheidung von Lithium aus dem Konversionsmaterial auf einem Stromableiter ergeben. Damit wird erfindungsgemäß unter einer Anode allgemein ein Bereich der elektrochemischen Zelle verstanden, an dem während des Entladevorgangs Elektronen freigesetzt werden. Die elektrochemische Zelle zeichnet sich durch eine sehr hohe Energiedichte bei guter Langzeitstabilität und hohen Entladeraten bzw. Laderaten aus. Die erfindungsgemäße elektrochemische Zelle eignet sich besonders zur Herstellung einer leistungsfähigen Lithiumionenbatterie, insbesondere für portable Geräte oder Kraftfahrzeuge.

Die erfindungsgemäße elektrochemische Zelle kann vorzugsweise ferner einen Stromableiter umfassen. Die Anode kann vorteilhafterweise als Lithiummetallfolie ausgebildet sein. Der Separator enthält hierbei einen oder mehrere Festkörper- oder Flüssigseparatoren.

Eine besonders bevorzugte Weiterbildung sieht vor, dass die elektrochemische Zelle metallisches Lithium, eine Kathode, einen oder mehrere Elektrolyte und einen oder mehrere Separatoren umfasst. Die Kathode ist hier aus der vorstehend beschriebenen Kompositelektrode gebildet und umfasst daher mindestens ein Konversionsmaterial und einen elastischen, leitfähigen polymeren Binder. Zur Vermeidung dendritischer Lithiumabscheidungen, kann die elektrochemische Zelle erfindungsgemäß auch eine dünne keramische Schutzschicht oder Festkörperelektrolyten oder eine dünne Schicht SLMP auf dem metallischen Lithium aufweisen. In der hier beschriebenen elektrochemischen Zelle kann das Lithium vorzugsweise aus dem Konversionsmaterial auf einem Stromableiter abgeschieden werden, um die Anodenfunktionalität bereitzustellen.

Die für die Kompositelektrode beschriebenen Vorteile, vorteilhaften Effekte und Weiterbildungen finden auch Anwendung auf die erfindungsgemäße elektrochemische Zelle.

Aufgrund der erfindungsgemäßen Lösungen sowie deren Weiterbildungen ergeben sich folgende Vorteile:
- Die Kompositelektrode zeichnet sich durch eine hohe Elastizität aus, die etwaige Volumenänderungen kompensieren kann.
- Rissbildung unter Zerstörung des Aktivmaterials wird effektiv verhindert.
- Durch die elektrische und ionische Leitfähigkeit des Binders werden hohe Laderaten und Entladeraten erzielt.
- Die elektrochemische Zelle hat eine hohe Energiedichte und eignet sich insbesondere für Anwendungen, die eine hohe Leistungsdichte erfordern.

Weitere Einzelheiten, Merkmale und Vorteile der Erfindung ergeben sich aus der nachfolgenden Beschreibung und den Figuren. Es zeigen:
- Figur 1: eine Kompositelektrode verwendet gemäß einer vorteilhaften Weiterbildung der Erfindung und
- Figur 2: eine Lithiumionenbatteriezelle unter Verwendung der Kompositelektrode aus Figur 1.

Die vorliegende Erfindung wird anhand von Ausführungsbeispielen im Detail erläutert. In den Figuren sind nur die hier interessierenden Teile der erfindungsgemäß verwendeten Kompositelektrode sowie der beispielhaft als Lithiumionenbatteriezelle beschriebenen erfindungsgemäßen elektrochemischen Zelle dargestellt. Alle übrigen Elemente sind der Übersichtlichkeit halber weggelassen. Ferner bezeichnen gleiche Bezugszeichen gleiche Elemente/Bauteile.

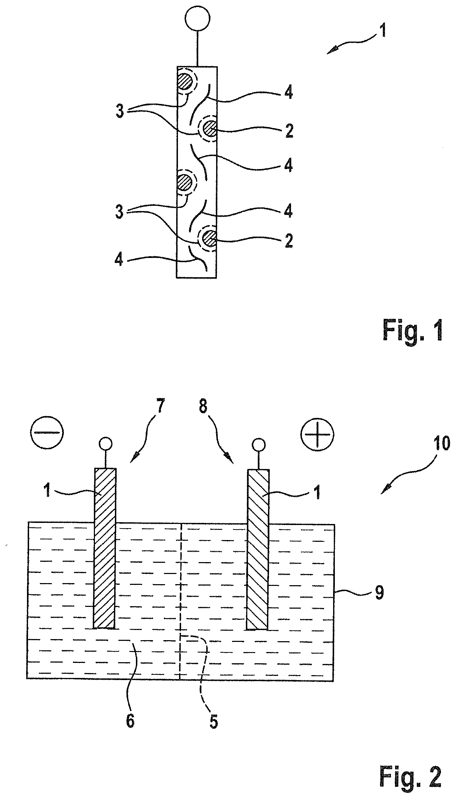

Im Detail zeigt Figur 1 eine Kompositelektrode 1, die als Kathode und optional auch als Anode in einer elektrochemischen Zelle ausgebildet sein kann. Die Kompositelektrode 1 ist zur Verwendung in einer elektrochemischen Zelle, insbesondere in einer Lithiumionenbatteriezelle, bereitgestellt und umfasst ein leitfähiges Additiv, ein so genanntes Leitfähigkeitsadditiv 2, ein Konversionsmaterial 3 und einen elastischen, leitfähigen polymeren Binder 4. Das Konversionsmaterial 3 dient als Speicher für die Lithiumionen, kann diese einlagern oder freisetzen. Das Konversionsmaterial liegt als Verbindung MX oder MXY vor, wobei M ein Übergangsmetall und ausgewählt ist aus der Gruppe bestehend aus: Fe, Bi, Ti, V, Co, Ni, Cu, Mn und Mischungen daraus, X ein Halogenid, ein Nichtmetall oder ein Halbmetall ist und Y aus der Gruppe bestehend aus: Alkali- und Erdalkalimetallen, C und AI ausgewählt ist. Das Übergangsmetall ist dabei in einem Zellladevorgang der elektrochemischen Zelle vollständig reduzierbar.

Der elastische, leitfähige Binder 4 stellt einen Verbund zwischen dem Konversionsmaterial 3 und dem Leitfähigkeitsadditiv 2 her, so dass die Kompositelektrode 1 eine ausreichende mechanische Stabilität aufweist. Der Binder 4 ist elastisch und kompensiert z.T. etwaige Volumenänderungen, wie sie bei Ladevorgängen oder Entladevorgängen des Elektrodenmaterials auftreten können, ohne dass es zu Rissbildung im Material kommt. Durch seine elektrische Leitfähigkeit sowie seine Lithiumionenleitfähigkeit kann der Binder 4 gleichzeitig als Leitadditiv wirken, so dass auf das Leitfähigkeitsadditiv 2 auch verzichtet werden kann, was die gravimetrische Energiedichte der Zelle erhöht und zudem Kosten einspart. Der polymere Binder 4 ist somit vorteilhafterweise frei von Leitfähigkeitsadditiven 2. Die Kompositelektrode 1 zeichnet sich durch eine hohe Energiedichte aus.

Figur 2 ist eine schematische Darstellung einer Lithiumionenbatteriezelle 10. Diese umfasst zwei Elektroden, die je aus der Kompositelektrode 1 aus Figur 1 gebildet sind. Somit ist eine Kompositelektrode 1 als Anode 7 und eine Kompositelektrode 1 als Kathode 8 ausgebildet. Die Anode 7 und die Kathode 8 sind zu einer Zelle zusammengefasst und in einen Behälter 9 eingebracht, der mit Elektrolyt 6 gefüllt ist. Ein Separator 5 trennt die Anodenseite der Zelle 10 von der Kathodenseite. Durch die Verwendung der erfindungsgemäßen Kompositelektrode 1 auf Seiten der Anode 7 und der Kathode 8, wird eine Lithiumionenbatteriezelle 10 mit hoher Energiedichte und guten Laderaten und Entladeraten bereitgestellt.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: Kompositelektrodenmaterial
- 2: Leitfähigkeitsadditiv
- 3: Konversionsmaterial
- 4: Binder
- 5: Separator
- 6: Elektrolyt
- 7: Anode
- 8: Kathode
- 9: Behälter
- 10: Lithiumionenbatteriezelle

## Patentansprüche

1. Elektrochemische Zelle umfassend eine Anode (7), eine Kathode (8), mindestens einen Elektrolyten (6) und mindestens einen Separator, wobei die Kathode (8) eine Kompositelektrode ist, die einen elastischen, leitfähigen polymeren Binder (4) mit einem aromatischen Rückgrat mit polaren Seitengruppen und ein Konversionsmaterial (3) umfasst,
- wobei das Konversionsmaterial (3) mindestens ein Übergangsmetall M und ein Anion X umfasst, wobei das Übergangsmetall in einem Zellladevorgang der elektrochemischen Zelle vollständig reduzierbar ist, wobei das Konversionsmaterial (3) als Verbindung MX oder MXY vorliegt,
wobei M ausgewählt ist aus der Gruppe bestehend aus: Fe, Bi, Ti, V, Co, Ni, Cu, Mn und Mischungen daraus,
wobei X ausgewählt ist aus der Gruppe bestehend aus: F, Cl, S, O, N und P und
wobei Y ausgewählt ist aus der Gruppe der Alkali- und Erdalkalimetalle, C und Al,
- wobei ein Anteil an Konversionsmaterial (3) zu einem Anteil an polymerem Binder kleiner oder gleich 99 : 1 ist und
- wobei ein Anteil an polymerem Binder (4) 1 bis 5 Gew.-%, bezogen auf das Gesamtgewicht des Konversionsmaterials (3), beträgt.

2. Elektrochemische Zelle nach Anspruch 1, **dadurch gekennzeichnet, dass** M ausgewählt ist aus der Gruppe bestehend aus Fe, Mn, Co und Cu.

3. Elektrochemische Zelle nach Anspruch 1 oder 2, **dadurch gekennzeichnet, dass** Y ausgewählt ist aus der Gruppe bestehend aus: Li, Na, K und C.

4. Elektrochemische Zelle nach einem der vorhergehenden Ansprüche, ferner enthaltend ein leitfähiges Additiv, wobei das leitfähige Additiv insbesondere aus der Gruppe bestehend aus: C, AI und Cu ausgewählt ist und vorzugsweise C, insbesondere Ruß oder Graphit, enthält.

5. Elektrochemische Zelle nach einem der vorhergehenden Ansprüche, **dadurch gekennzeichnet, dass** die Kompositelektrode metallisches Lithium, insbesondere stabilized lithium metal powder (SLMP), enthält.

6. Elektrochemische Zelle nach einem der vorhergehenden Ansprüche, **dadurch gekennzeichnet, dass** ein Anteil an Konversionsmaterial (3) zu einem Anteil an polymerem Binder (4) 4 : 1, insbesondere 9 : 1 und insbesondere 99 : 1, beträgt.

7. Elektrochemische Zelle nach einem der vorhergehenden Ansprüche, **dadurch gekennzeichnet, dass** der polymere Binder (4) Polyethylenoxid-Seitenketten aufweist und/oder dass der polymere Binder (4) Polyfluoren-Einheiten und/oder Benzoesäure-Einheiten und/oder Biphenyleinheiten und/oder Fluoren-Einheiten im Rückgrat aufweist.

8. Elektrochemische Zelle nach einem der vorhergehenden Ansprüche, **dadurch gekennzeichnet, dass** der polymere Binder (4) Poly(2,7-9,9-dioctylfluoren-co-2,7-9,9-(di(oxy-2,5,8-trioxadecan))fluorin-co-2,7-fluorenon-co-2,5-1-methylbenzoesäureester) (PFPFOFOMB) ist.

9. Elektrochemische Zelle nach einem der vorhergehenden Ansprüche, **dadurch gekennzeichnet, dass** die Anode (7) aus einer Kompositelektrode wie in einem der vorhergehenden Ansprüche definiert, gebildet ist.

10. Elektrochemische Zelle nach einem der Ansprüche 1 bis 9, ferner umfassend einen Stromableiter, wobei die Anode (7) als Lithiummetallfolie ausgebildet ist oder flüssiges Lithium umfasst, und der Separator einen oder mehrere Festkörper- oder Flüssigseparatoren enthält.

## Claims

1. Electrochemical cell comprising an anode (7), a cathode (8), at least one electrolyte (6) and at least one separator, wherein the cathode (8) is a composite electrode comprising an elastic, conductive polymeric binder (4) having an aromatic backbone with polar side groups and a conversion material (3),
- where the conversion material (3) comprises at least one transition metal M and an anion X, where the transition metal is completely reducible in a cell charging operation of the electrochemical cell, where the conversion material (3) is present as compound MX or MXY,
where M is selected from the group consisting of: Fe, Bi, Ti, V, Co, Ni, Cu, Mn and mixtures thereof,
where X is selected from the group consisting of: F, Cl, S, O, N and P and
where Y is selected from the group of alkali metals and alkaline earth metals, C and Al,
- where a proportion of conversion material (3) to a proportion of polymeric binder is less than or equal to 99:1 and
- where a proportion of polymeric binder (4) is from 1 to 5% by weight, based on the total weight of the conversion material (3).

2. Electrochemical cell according to Claim 1, **characterized in that** M is selected from the group consisting of Fe, Mn, Co and Cu.

3. Electrochemical cell according to Claim 1 or 2, **characterized in that** Y is selected from the group consisting of: Li, Na, K and C.

4. Electrochemical cell according to any of the preceding claims, additionally containing a conductive additive, wherein the conductive additive is, in particular, selected from the group consisting of: C, Al and Cu and preferably contains C, in particular carbon black or graphite.

5. Electrochemical cell according to any of the preceding claims, **characterized in that** the composite electrode contains metallic lithium, in particular stabilized lithium metal powder (SLMP).

6. Electrochemical cell according to any of the preceding claims, **characterized in that** a proportion of conversion material (3) to a proportion of polymeric binder (4) is 4:1, in particular 9:1 and in particular 99:1.

7. Electrochemical cell according to any of the preceding claims, **characterized in that** the polymeric binder (4) has polyethylene oxide side chains and/or **in that** the polymeric binder (4) has polyfluorene units and/or benzoic acid units and/or biphenyl units and/or fluorene units in the backbone.

8. Electrochemical cell according to any of the preceding claims, **characterized in that** the polymeric binder (4) is poly(2,7-9,9-dioctylfluorene-co-2,7-9,9-(di(oxy-2,5,8-trioxadecane))fluorene-co-2,7-fluorenone-co-2,5-1-methyl benzoate) (PFPFOFOMB).

9. Electrochemical cell according to any of the preceding claims, **characterized in that** the anode (7) is formed by a composite electrode as defined in any of the preceding claims.

10. Electrochemical cell according to any of Claims 1 to 9, further comprising a power outlet lead, wherein the anode (7) is configured as lithium metal foil or comprises liquid lithium and the separator contains one or more solid separators or liquid separators.

## Revendications

1. Cellule électrochimique comprenant une anode (7), une cathode (8), au moins un électrolyte (6) et au moins un séparateur, la cathode (8) étant une électrode composite qui comprend un liant polymérique conducteur, élastique (4) comportant un squelette aromatique doté de groupes latéraux polaires et un matériau de conversion (3),
- le matériau de conversion (3) comprenant au moins un métal de transition M et un anion X, le métal de transition étant, dans un processus de charge de cellule de la cellule électrochimique, totalement réductible, le matériau de conversion (3) étant présent en tant que composé MX ou MXY, M étant choisi dans le groupe constitué par :
Fe, Bi, Ti, V, Co, Ni, Cu, Mn et des mélanges correspondants,
X étant choisi dans le groupe constitué par : F, Cl, S, O, N et P et
Y étant choisi dans le groupe des métaux alcalins et alcalino-terreux, C et Al,
- une proportion de matériau de conversion (3) sur une proportion de liant polymérique étant inférieure ou égale à 99 : 1 et
- une proportion de liant polymérique (4) étant de 1 à 5 % en poids, par rapport au poids total du matériau de conversion (3).

2. Cellule électrochimique selon la revendication 1, **caractérisée en ce que** M est choisi dans le groupe constitué par Fe, Mn, Co et Cu.

3. Cellule électrochimique selon la revendication 1 ou 2, **caractérisée en ce que** Y est choisi dans le groupe constitué par : Li, Na, K et C.

4. Cellule électrochimique selon l'une quelconque des revendications précédentes, contenant en outre un additif conducteur, l'additif conducteur étant en particulier choisi dans le groupe constitué par : C, Al et Cu et contenant de préférence C, en particulier de la suie ou du graphite.

5. Cellule électrochimique selon l'une quelconque des revendications précédentes, **caractérisée en ce que** l'électrode composite contient du lithium métallique, en particulier de la poudre métallique de lithium stabilisée (stabilized lithium metal powder - SLMP).

6. Cellule électrochimique selon l'une quelconque des revendications précédentes, **caractérisée en ce qu'**une proportion de matériau de conversion (3) sur une proportion de liant polymérique (4) est de 4 : 1, en particulier 9 : 1 et en particulier 99 : 1.

7. Cellule électrochimique selon l'une quelconque des revendications précédentes, **caractérisée en ce que** le liant polymérique (4) présente des chaînes latérales de type poly(oxyde d'éthylène) et/ou **en ce que** le liant polymérique (4) présente des motifs de type polyfluorène et/ou des motifs de type acide benzoïque et/ou des motifs de type biphényle et/ou des motifs de type fluorène dans le squelette.

8. Cellule électrochimique selon l'une quelconque des revendications précédentes, **caractérisée en ce que** le liant polymérique (4) est un poly(ester d'acide 2,7-9,9-dioctylfluorén-co-2,7-9,9-(di(oxy-2,5,8-trioxadécan))fluorin-co-2,7-fluorénone-co-2,5-1-méthylbenzoïque) (PFPFOFOMB).

9. Cellule électrochimique selon l'une quelconque des revendications précédentes, **caractérisée en ce que** l'anode (7) est formée d'une électrode composite comme décrite dans l'une quelconque des revendications précédentes.

10. Cellule électrochimique selon l'une quelconque des revendications 1 à 9, comprenant en outre un déflecteur de courant, l'anode (7) étant formée en tant que feuille métallique de lithium ou comprenant du lithium liquide, et le séparateur contenant un ou plusieurs séparateurs solides ou liquides.
